# FASCICULE DE BREVET EUROPEEN

(11) **EP 2 779 828 B1**
(45) Date de publication et mention de la délivrance du brevet: **07.10.2015**
(21) Numéro de dépôt: 12795555.7
(22) Date de dépôt: 15.11.2012
(51) Int. Cl.: A01M 29/16, G10K 15/02

(54) **PROCÉDÉ ET DISPOSITIF D'EFFAROUCHEMENT ACOUSTIQUE D'ESPÈCES AVIAIRES, EN PARTICULIER POUR UN AÉRONEF**
VERFAHREN UND VORRICHTUNG ZUR AKUSTISCHEN ABSCHRECKUNG VON VÖGELN, INSBESONDERE FÜR EIN FLUGZEUG
METHOD AND DEVICE FOR SCARING BIRDS ACOUSTICALLY, IN PARTICULAR FOR AN AIRCRAFT

(30) Priorité: 18.11.2011 FR 1160546
(43) Date de publication de la demande: 24.09.2014
(73) Titulaire: Airbus Operations (S.A.S.), 31060 Toulouse (FR); Université de Rennes 1, 35065 Rennes Cedex (FR); Centre National de la Recherche Scientifique, 75794 Paris Cedex 16 (FR)
(72) Inventeur: PAPIN, Nathalie, F-31500 Toulouse (FR); SEBE, Frédéric, F-38570 Theys (FR); AUBIN, Thierry, F-28210 St Lucien (FR)
(74) Mandataire: Gevers France
(86) Numéro de dépôt international: PCT/FR2012/052635
(87) Numéro de publication internationale: WO 2013/072632

(56) Documents cités:
- WO-A1-97/29633
- WO-A1-2006/114300
- WO-A1-2010/023253
- FR-A1- 2 599 175
- JP-A- 2002 159 257
- US-A- 3 594 786

## Description

La présente invention concerne un procédé et un dispositif d'effarouchement acoustique d'espèces aviaires.

Un tel dispositif a pour objet d'éloigner, par la génération de signaux acoustiques, des espèces aviaires de zones sensibles d'activité humaine.

Bien que non exclusivement, la présente invention peut s'appliquer plus particulièrement à l'effarouchement acoustique d'espèces aviaires sur un domaine aéroportuaire, à partir d'un système exploité au sol ou à partir d'un système embarqué sur un aéronef, pour limiter les collisions aviaires avec les aéronefs.

Les dispositifs d'effarouchement acoustique sont donc des appareils qui produisent des sons destinés à effrayer les oiseaux. Il existe actuellement trois grands types de méthodes d'effarouchement, à savoir l'utilisation de détonateurs (canons à gaz), la diffusion de signaux de gêne, et la diffusion de signaux de détresse.

Par le document FR - 2 599 175, on connaît un procédé de synthèse de sons correspondant à des cris d'animaux, qui sont utilisés par des dispositifs d'effarouchement.

Les signaux numériques diffusés dans ce cas appartiennent à deux catégories : des signaux de détresse et des signaux de gêne, utilisés séparément. Les signaux de détresse actuellement utilisés dans les aéroports en France et en Europe sont des signaux d'alarme de haute intensité qui provoquent une approche des oiseaux de la source sonore, suivie immédiatement d'une dispersion au loin desdits oiseaux. Les signaux de gêne correspondent, quant à eux, à une « barrière » acoustique provoquant une gêne auditive empêchant la venue d'oiseaux dans une zone déterminée.

Les deux principaux problèmes des méthodes d'effarouchement acoustique usuelles résident dans le fait que :
- soit il apparaît une accoutumance rapide des espèces cibles rendant la méthode inefficace à très court terme (cas des détonateurs) ;
- soit ces méthodes ne ciblent qu'un nombre limité d'espèces aviaires.

Ainsi, les dispositifs d'effarouchement à base de signaux de détresse actuellement utilisés sont inopérants sur de nombreuses espèces européennes, comme les rapaces (qui occasionnent plus de 30% des collisions), mais également sur des espèces non européennes (Amérique du Sud, Asie et Afrique).

De plus, l'Amérique du Sud, l'Asie et l'Afrique devraient être soumis à une augmentation du trafic aérien, ce qui devrait accroître considérablement le risque de collisions aviaires avec de nouvelles espèces dans ces régions.

Par ailleurs, on sait que, notamment pour des raisons de coût, de nombreux aéroports ne disposent pas des moyens et des techniques d'effarouchement (acoustiques ou autres) existant actuellement et employés sur d'autres aéroports.

La présente invention a pour objet de remédier aux inconvénients précités. Elle concerne un procédé d'effarouchement acoustique d'espèces aviaires, qui est notamment particulièrement efficace.

A cet effet, selon l'invention, ledit procédé selon lequel :
a) on génère au moins une séquence acoustique ; et
b) on émet cette séquence acoustique sous forme d'ondes acoustiques, est remarquable en ce qu'à l'étape a), on génère dans une même séquence acoustique la répétition d'une combinaison d'au moins trois catégories de signaux de synthèse différentes, comprenant des signaux d'alarme de rapaces, des signaux de détresse interspécifiques et des signaux d'envol de différentes espèces.

Dans le cadre de la présente invention, ladite séquence acoustique est constituée de signaux de synthèse contenant des informations d'alarme, de détresse et d'envol. En synthétisant ces signaux, on ne conserve que l'information utile (alarme, détresse, et envol), comme précisé ci-dessous. Ces signaux ne correspondent donc pas à de simples copies synthétisées de signaux naturels.

Ainsi, la présente invention prévoit la diffusion au sein de la même séquence acoustique de trois catégories de signaux (au moins), dont l'enchaînement particulier suscite biologiquement un accroissement de l'état de stress des oiseaux, comme précisé ci-dessous. Cette émission de signaux combinés entraîne des réponses comportementales plus rapides, plus intenses et plus efficaces (sur le plan de la rapidité de l'envol et de la dispersion au loin) que pour les signaux spécifiques seuls utilisés actuellement, et est efficace contre un nombre beaucoup plus élevé d'espèces aviaires.

Le procédé conforme à la présente invention prévoit donc un enchaînement séquentiel de signaux acoustiques de synthèse, qui est efficace sur un grand nombre d'oiseaux. Il peut notamment être mis en oeuvre pour faire fuir les oiseaux de zones où leur présence se révèle nuisible ou dangereuse vis-à-vis des activités humaines, et notamment sur des domaines aéroportuaires.

Cette combinaison de signaux acoustiques d'effarouchement (à savoir successivement des signaux d'alarme de rapaces, des signaux de détresse interspécifiques et des signaux d'envol de différentes espèces) au sein d'une même séquence est plus efficace qualitativement (envol, dispersion), et surtout quantitativement (beaucoup plus d'espèces sont potentiellement effarouchées avec la combinaison) que les solutions usuelles.

De façon avantageuse, les signaux utilisés dans la séquence sont construits par synthèse acoustique sur des modèles de signaux naturels, ce qui permet de conserver et d'amplifier leur valeur biologique d'alarme.

Le choix précis de ces signaux et de leur combinaison permet d'effaroucher un maximum d'espèces différentes du monde entier, et ceci sans identification préalable. Des tests concluants de l'invention ont été menés en Europe, en Asie, en Amérique du Sud et en Afrique.

Dans un mode de réalisation préféré :
- les signaux de rapaces sont des signaux de détresse de synthèse de milan noir ;
- les signaux interspécifiques sont des signaux de détresse synthétisés à partir des caractéristiques communes des signaux naturels de détresse des étourneaux, vanneaux, corvidés et laridés ; et
- les signaux d'envol sont des battements d'ailes de colombidés.

De préférence, ladite séquence présente une durée prédéterminée, par exemple une minute, au cours de laquelle chaque catégorie de signaux est diffusée pendant un même temps, par exemple quelques secondes, les catégories de signaux prévues étant diffusées successivement en boucle.

La présente invention prévoit un ordre de combinaison particulier qui permet d'effaroucher avec une seule séquence le maximum d'espèces, sans nécessairement devoir les identifier. De plus, avantageusement, on peut introduire dans ladite séquence des signaux auxiliaires qui présentent une efficacité vis-à-vis d'une espèce aviaire donnée.

En outre, de façon avantageuse, on peut réaliser au moins l'une des modifications suivantes sur ladite séquence acoustique :
- une modification de la durée des signaux ;
- une modification de la durée de silences entre des signaux successifs ; et
- une modification de leurs positions relatives dans la séquence.

Ceci permet de perfectionner la séquence sonore, en particulier en fonction de l'avancement des connaissances et de la situation rencontrée (espèces cibles, pays).

La présente invention concerne également un dispositif d'effarouchement acoustique d'espèces aviaires, comprenant des moyens d'émission d'une séquence acoustique sous forme d'ondes acoustiques.

Selon l'invention, ledit dispositif est remarquable en ce que lesdits moyens d'émission émettent une séquence acoustique comprenant la répétition d'une combinaison d'au moins trois catégories de signaux différentes, comprenant des signaux d'alarme de rapaces, des signaux de détresse interspécifiques, et des signaux d'envol de différentes espèces.

En outre, avantageusement, ledit dispositif peut également comporter des moyens de déclenchement à distance de l'émission d'une séquence acoustique.

Le dispositif conforme à l'invention, qui comprend :
- des moyens de stockage et de gestion de la séquence acoustique ;
- des moyens d'émission (haut-parleurs) de cette séquence acoustique sous forme d'ondes acoustiques ; et
- des moyens de déclenchement de l'émission,
peut être un dispositif prévu au sol, avec des moyens d'émission montés à poste fixe ou susceptibles d'être déplacés, ou un dispositif embarqué sur un aéronef.

Dans cette dernière application, le dispositif d'effarouchement est indépendant des installations aéroportuaires locales, et peut donc être utilisé sur des aéroports dépourvus d'équipements d'effarouchement et de lutte aviaire.

La présente invention concerne, en outre, un aéronef, en particulier un avion de transport, qui comporte un dispositif tel que celui précité.

Dans ce cas, dans un mode de réalisation préféré, les moyens d'émission (haut-parleurs) sont agencés au niveau du train d'atterrissage avant de l'aéronef de manière :
- à se trouver à l'intérieur du fuselage de l'aéronef, lorsque ledit train d'atterrissage est entré ; et
- à être déplacés lors de la sortie du train d'atterrissage pour se retrouver à l'extérieur, en étant dirigés vers une zone à sécuriser, lorsque ledit train d'atterrissage est entièrement sorti.

Le dispositif d'effarouchement acoustique est ainsi utilisé dans les mêmes phases de vol que celles pour lesquelles le train d'atterrissage est sorti. Il n'a donc aucun impact aérodynamique négatif sur le reste du vol, une fois le train d'atterrissage rentré.

Ce dispositif d'effarouchement acoustique peut être un dispositif indépendant de l'aéronef. Toutefois, dans un mode de réalisation particulier, ledit dispositif fait partie d'un système usuel d'alerte de personnel au sol, qui équipe l'aéronef.
Les figures du dessin annexé feront bien comprendre comment l'invention peut être réalisée. Sur ces figures, des références identiques désignent des éléments semblables.
La figure 1 montre, dans une vue schématique, un dispositif conforme à l'invention, dans une application particulière.
La figure 2 est une représentation graphique permettant de préciser une combinaison préférée de signaux.

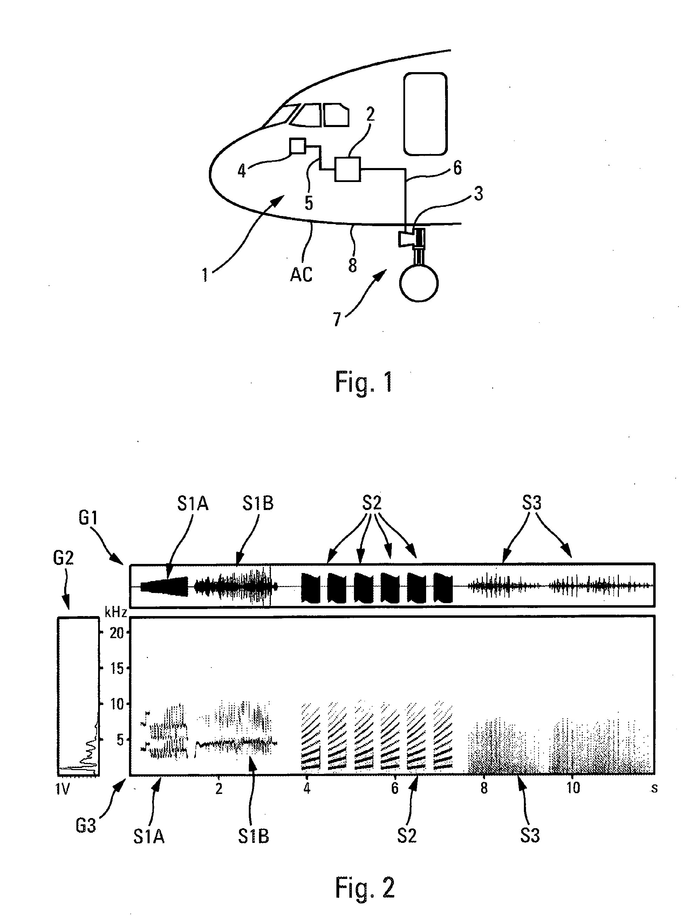

Le dispositif 1 conforme à l'invention et représenté schématiquement sur la figure 1 est un dispositif d'effarouchement acoustique d'espèces aviaires. Ce dispositif 1 a pour objet d'éloigner par la génération de signaux acoustiques des espèces aviaires de zones sensibles d'activité humaine.

Bien que non exclusivement, le dispositif 1 peut être utilisé plus particulièrement pour effaroucher des espèces aviaires sur un domaine aéroportuaire, en étant exploité au sol ou en étant embarqué sur un aéronef AC, en particulier un avion de transport, pour limiter les collisions aviaires avec les aéronefs, comme représenté à titre d'illustration (non limitative) sur la figure 1.

Pour ce faire, ledit dispositif 1 comprend :
- des moyens 2 de stockage et de gestion d'une séquence acoustique utilisée, précisée ci-dessous ;
- des moyens 3 (au moins un haut-parleur) qui sont reliés par l'intermédiaire d'une liaison (électrique) 6 auxdits moyens 2 et qui sont formés de manière à émettre cette séquence acoustique, de façon usuelle, sous forme d'ondes acoustiques ; et
- des moyens 4 de déclenchement d'une telle émission, qui sont reliés par l'intermédiaire d'une liaison (électrique) 5 auxdits moyens 2.

Selon l'invention, lesdits moyens d'émission 3 émettent une séquence acoustique comprenant la répétition d'une combinaison d'au moins trois catégories de signaux différentes, comprenant des signaux d'alarme de rapaces, des signaux de détresse interspécifiques, et des signaux d'envol de différentes espèces. Cette séquence acoustique est constituée de signaux de synthèse contenant des informations d'alarme, de détresse et d'envol. Dans ces signaux synthétisés, on ne conserve que l'information utile (alarme, détresse, et envol).

Ainsi, le dispositif 1 conforme à l'invention prévoit la diffusion au sein de la même séquence acoustique de trois catégories de signaux au moins, dont l'enchaînement particulier suscite biologiquement un accroissement de l'état de stress des oiseaux, comme précisé ci-dessous. Cette émission de signaux combinés entraîne des réponses comportementales plus rapides, plus intenses et plus efficaces (sur le plan de la rapidité de l'envol et de la dispersion au loin) que pour les signaux spécifiques utilisés actuellement, et est efficace contre un nombre beaucoup plus élevé d'espèces d'oiseaux.

Cette combinaison de signaux acoustiques d'effarouchement au sein d'une même séquence est donc plus efficace qualitativement (envol, dispersion) et surtout quantitativement (beaucoup plus d'espèces sont potentiellement effarouchées avec la combinaison) que les solutions usuelles.

Dans un mode de réalisation préféré, les signaux utilisés dans la séquence sont construits par synthèse acoustique sur des modèles de signaux naturels, puis enregistrés sur un moyen de stockage usuel (non représenté) desdits moyens 2. Une telle construction par synthèse acoustique permet aux signaux de conserver leur valeur biologique d'alarme tout en enlevant les bruits non informatifs intra-signaux.

La présente invention propose également un ordre de combinaison particulier (à savoir successivement des signaux d'alarme de rapaces, des signaux de détresse interspécifiques et des signaux d'envol de différentes espèces) qui permet (en liaison avec le choix de ces signaux) d'effaroucher avec une seule séquence le maximum d'espèces du monde entier, sans nécessairement avoir à les identifier.

De préférence, ladite séquence présente une durée prédéterminée, par exemple une minute, au cours de laquelle chaque catégorie de signaux est diffusée pendant un même temps, par exemple quelques secondes, les différentes catégories de signaux étant diffusées (successivement) en boucle (pendant cette durée prédéterminée).

Ainsi, outre le fait que chaque signal est interprété par les différentes espèces aviaires comme un avertissement de danger imminent, c'est également l'enchaînement particulier qui suscite biologiquement un accroissement de l'état de stress des oiseaux, les conduisant à quitter rapidement la zone d'émission. De même, l'incorporation de signaux de rapaces diminue l'approche et rend la dispersion plus rapide. Enfin, l'incorporation des signaux non spécifiques d'envol (à savoir des bruits d'ailes) augmente l'état de stress et entraîne l'envol de nombreux groupes d'oiseaux qui ne répondent pas forcément, spécifiquement, aux signaux de détresse ou d'alarme. La réponse comportementale aux signaux combinés est donc plus intense et plus efficace que des signaux spécifiques similaires utilisés seuls actuellement. On a constaté que les vitesses d'envol, de dispersion et la proportion d'oiseaux effarouchés, suite à la diffusion des signaux combinés, sont plus importantes que celles observées lors des diffusions de signaux de détresse utilisés seuls.

La combinaison préférentiellement utilisée est donc une combinaison de signaux d'alarme de rapaces, de signaux de détresse interspécifiques et de signaux d'envol non spécifiques, comme représenté sur la figure 2. La figure 2 comprend trois graphiques G1, G2 et G3 illustrant, respectivement, une représentation temps-amplitude, une représentation amplitude-fréquence et une représentation temps-fréquence de la combinaison préférentielle des signaux utilisés, le temps étant exprimé en secondes (s), la fréquence en kilohertz (kHz) et l'amplitude en volt (V). Le signal combinatoire dure une minute : durant cette minute deux signaux de rapaces S1A et S1B sont diffusés pendant quatre secondes, suivis de six signaux interspécifiques S2 de quatre secondes, suivis de bruits S3 de battements d'ailes de quatre secondes, et ainsi de suite jusqu'au terme de la minute. Ce signal peut durer plus longtemps (c'est-à-dire être répété) si cela est jugé utile, par exemple de manière à être émis pendant toute une phase de vol d'un aéronef AC si le dispositif 1 est embarqué sur un aéronef AC.

Dans un mode de réalisation préféré :
- les signaux de rapaces S1A et S1B sont des signaux de détresse de synthèse de milan noir. La bande de fréquences de ces signaux va de 2,4 kHz à 10 kHz. Il s'agit d'un signal complexe comprenant des harmoniques et une fréquence fondamentale moyenne de 2,6 kHz avec une modulation de fréquence de 1,25 kHz sur 0,02 secondes ;
- les signaux interspécifiques S2 sont des signaux de détresse synthétisés à partir des caractéristiques communes des signaux naturels de détresse des étourneaux, vanneaux, corvidés et laridés. La bande de fréquences de ces signaux va de 850 Hz à 9,5 kHz. Il s'agit d'un signal complexe comprenant des harmoniques et une fréquence fondamentale moyenne de 1 kHz avec une modulation de fréquence croissante de 350 Hz sur la totalité du signal de 0,42 secondes ; et
- les signaux d'envol S3 sont des battements d'ailes de colombidés. Il s'agit de bruits pulsés (80 impulsions en 4 secondes). Ces impulsions à large bande de fréquence (de 100 Hz à 7 KHz) proviennent de synthèses de bruits d'ailes émis par plus de trois individus.

Le choix précis de ces signaux et de leur combinaison permet d'effaroucher un maximum d'espèces différentes du monde entier, et ceci sans identification préalable. Des tests concluants de ces signaux ont été menés en Europe, en Asie, en Amérique du Sud et en Afrique.

L'ordre de combinaison particulier considéré (à savoir successivement des signaux d'alarme de rapaces, des signaux de détresse interspécifiques et des signaux d'envol de différentes espèces) permet (en liaison avec le choix de ces signaux) d'effaroucher avec une seule séquence le maximum d'espèces du monde entier, sans nécessairement avoir à les identifier. Cet ordre de diffusion des signaux dans la séquence présente une grande importance : la séquence a une signification biologique. En effet, les animaux reçoivent d'abord une information d'alarme (les mettant en alerte de venue d'un prédateur et en état de stress), puis une information de détresse indiquant qu'un ou des individus ont été capturés (augmentant l'état de stress) et enfin une information d'envol les poussant à quitter immédiatement l'aire de diffusion des signaux. Cet ordre particulier de succession des signaux a donc pour effet d'augmenter considérablement l'état de stress des oiseaux et de faire fuir un maximum d'espèces différentes, mêmes des espèces (pigeons, ibis par exemple) pour lesquels les signaux d'alarme ou de détresse diffusés seuls par des systèmes d'effarouchement usuels n'avaient pas d'effet.

Par ailleurs on notera que :
- les signaux acoustiques constituant la séquence ne sont absolument pas des signaux naturels d'alarme, de détresse et d'envol (émis par les oiseaux), mais des signaux entièrement fabriqués par synthèse acoustique sur ordinateur. Ces signaux empruntent simplement et respectivement aux signaux naturels un codage de l'information type alarme, détresse et envol au niveau des modulations de fréquence et spectral. Ces signaux de synthèse sont débarrassés des bruits non-codant intra-signaux des signaux naturels. En conséquence, ces signaux de synthèse sont plus performants en terme d'effarouchement que les signaux naturels correspondants (dispersion des oiseaux plus intense et plus loin). De plus, par rapport aux signaux naturels, les niveaux d'intensité des fréquences harmoniques les plus aigües ont été renforcés, ce qui les rend plus pénétrant et aptes à se propager plus loin, augmentant ainsi leur rapport signal/bruit et leur rayon d'efficacité en distance ; et
- les signaux de synthèse prévus dans la séquence sont beaucoup plus interspécifiques que les signaux naturels, car on peut utiliser pour les construire les codes communs à de très nombreuses espèces d'oiseaux (plus de cinquante espèces par exemple) aussi bien au niveau de l'information d'alarme que de l'information de détresse.

Par ailleurs, dans un mode de réalisation particulier, on introduit dans ladite séquence des signaux auxiliaires (supplémentaires) qui présentent une efficacité vis-à-vis d'une espèce aviaire donnée.

En outre, on peut réaliser au moins l'une des modifications suivantes sur ladite séquence acoustique :
- une modification de la durée des signaux ;
- une modification de la durée des silences entre deux signaux successifs ; et
- une modification de leurs positions relatives dans la séquence (ordre d'appariation des signaux).

Ces dernières caractéristiques permettent de perfectionner la séquence sonore, en particulier en fonction de l'avancement des connaissances et de la situation rencontrée (espèces cibles, pays).

Dans le cadre de la présente invention, ledit dispositif 1 peut être :
- un dispositif prévu au sol, avec des moyens d'émission 3 (haut-parleurs) qui sont soit montés à poste fixe, soit démontables, et qui sont disposés au niveau de zones sensibles d'activité humaine, en particulier sur un aéroport, de préférence à proximité d'une piste ; ou
- un dispositif embarqué sur un aéronef AC.

En outre, les moyens de déclenchement 4 peuvent être formés de manière à permettre un déclenchement à distance de l'émission d'une séquence acoustique.

Dans le cas d'une utilisation sur un aéroport, le dispositif 1 peut être employé pour diffuser les signaux-combinatoires, durant par exemple une minute, lors de la présence d'oiseaux sur les pistes de décollage et d'atterrissage ou en périphérie. Les signaux sont émis à partir de haut-parleurs embarqués à bord d'un véhicule ou à partir de haut-parleurs positionnés le long des pistes. L'intensité moyenne, à laquelle ces signaux doivent être émis, doit être d'environ 100 dBSPL mesuré à un mètre des haut-parleurs.

L'émission de signaux combinatoires peut également être télécommandée et réalisée à partir de moyens démontables et autonomes disposés à proximité d'une piste. La surface couverte par le signal dépend des caractéristiques des moyens d'émission 3 et des conditions météorologiques.

Dans le cas d'un dispositif 1 embarqué sur un aéronef AC, comme représenté sur la figure 1, on dispose d'un dispositif d'effarouchement qui est indépendant des installations aéroportuaires locales, et qui peut donc être utilisé (mais non exclusivement) sur des aéroports dépourvus d'équipements d'effarouchement et de lutte aviaire, notamment pour limiter les collisions aviaires.

Dans ce cas, le pilote peut déclencher le dispositif d'effarouchement (à l'aide des moyens 4) avant de décoller ou à l'approche d'un aéroport, pour lequel le risque aviaire est suspecté, sans avoir à connaître les espèces locales à effaroucher. Il devra tout au plus sélectionner les signaux par rapport à l'aéroport concerné, par exemple par grande zone géographique (signaux d'effarouchement par continents).

La diffusion des signaux durant la phase de roulage au sol, permet en premier lieu de sécuriser la piste avant le décollage. Enfin, la diffusion du signal combinatoire durant les phases initiale de décollage et finale d'atterrissage (au-dessous de 1500 pieds) permet de limiter les collisions dans ces phases de vol (représentant 70 % des cas de collisions, les plus graves ayant lieu au décollage).

Dans un mode de réalisation préféré, représenté sur la figure 1, les moyens de déclenchement 4 installés au niveau du poste de pilotage de l'aéronef AC. De plus, les moyens d'émission 3 (haut-parleurs) sont agencés au niveau du train d'atterrissage avant 7 de l'aéronef AC de manière :
- à se trouver à l'intérieur du fuselage 8 de l'aéronef AC, lorsque ledit train d'atterrissage 7 est entré ; et
- à être déplacés lors de la sortie du train d'atterrissage 7 pour se retrouver à l'extérieur (du fuselage 8), en étant dirigés vers une zone à sécuriser, de préférence vers l'avant de l'aéronef AC, lorsque le train d'atterrissage 7 est entièrement sorti.

Les moyens d'émission (haut-parleurs) peuvent être agencés au niveau du logement du train avant 7 ou directement sur ledit train avant 7, comme représenté sur la figure 1.

Le dispositif d'effarouchement acoustique 1 est ainsi utilisé dans les mêmes phases de vol que celles pour lesquelles le train d'atterrissage avant 7 est sorti. Il n'a donc aucun impact aérodynamique négatif sur le reste du vol, une fois le train d'atterrissage avant 7 rentré.

De plus, la localisation du haut-parleur 3 en pointe permet d'optimiser l'efficacité du signal dirigé vers l'avant de l'aéronef AC, et minimiser la perturbation induite des autres sources sonores de l'aéronef AC, telles que les moteurs, les surfaces mobiles ou les trains d'atterrissage principaux.

Le dispositif d'effarouchement acoustique 1 peut, dans ce cas, être un dispositif indépendant. Toutefois, il peut également être intégré dans des systèmes avioniques existants. Ainsi, dans un mode de réalisation particulier, ledit dispositif 1 fait partie d'un système usuel d'alerte de personnel au sol (appelé « Ground crew call system » en anglais) qui équipe l'aéronef AC. Ce système usuel est installé au niveau du logement du train avant 7 et est activé à partir du poste de pilotage pour alerter le personnel au sol en cas de besoin. Ce système peut ainsi intégrer les fonctionnalités d'effarouchement aviaire sonore, conformes à l'invention, telles que précisées ci-dessus.

## Revendications

1. Procédé d'effarouchement acoustique d'espèces aviaires, procédé selon lequel :
a) on génère au moins une séquence acoustique ; et
b) on émet cette séquence acoustique sous forme d'ondes acoustiques, procédé selon lequel de plus à l'étape a), on génère dans une même séquence acoustique la répétition d'une combinaison d'au moins trois catégories de signaux de synthèse différentes, comprenant successivement des signaux d'alarme de rapaces (S1A, S1B) qui sont des signaux de détresse de synthèse de milan noir, des signaux de détresse interspécifiques (S2) qui sont des signaux de détresse synthétisés à partir de caractéristiques communes des signaux naturels de détresse des étourneaux, vanneaux, corvidés et laridés, et des signaux d'envol (S3) de différentes espèces qui représentent des battements d'ailes de colombidés.

2. Procédé selon la revendication 1,
**caractérisé en ce que** l'on introduit, de plus, dans ladite séquence, des signaux auxiliaires qui présentent une efficacité vis-à-vis d'une espèce aviaire donnée.

3. Procédé selon l'une des revendications 1 et 2,
**caractérisé en ce que** lesdits signaux sont construits par synthèse acoustique sur des modèles de signaux naturels.

4. Procédé selon l'une quelconque des revendications précédentes, **caractérisé en ce que** l'on réalise au moins l'une des modifications suivantes sur ladite séquence acoustique :
- une modification de la durée des signaux ;
- une modification de la durée de silences entre des signaux successifs ; et
- une modification de leurs positions relatives dans la séquence.

5. Procédé selon l'une quelconque des revendications précédentes, **caractérisé en ce que** ladite séquence présente une durée prédéterminée, au cours de laquelle chaque catégorie de signaux est diffusée pendant un même temps, lesdites catégories de signaux étant diffusées successivement en boucle.

6. Procédé selon l'une quelconque des revendications précédentes, **caractérisé en ce que** l'on émet la séquence acoustique sous forme d'ondes acoustiques à l'aide de moyens d'émission (3) qui sont agencés au niveau du train d'atterrissage avant (7) d'un aéronef (AC) de manière :
- à se trouver à l'intérieur du fuselage (8) de l'aéronef (AC), lorsque ledit train d'atterrissage (7) est entré ; et
- à être déplacés lors de la sortie du train d'atterrissage (7) pour se retrouver à l'extérieur en étant dirigés vers une zone à sécuriser, lorsque le train d'atterrissage (7) est entièrement sorti.

7. Dispositif d'effarouchement acoustique d'espèces aviaires, comprenant des moyens (3) d'émission d'une séquence acoustique sous forme d'ondes acoustiques, lesdits moyens d'émission (3) émettant une séquence acoustique comprenant la répétition d'une combinaison d'au moins trois catégories de signaux différentes, comprenant successivement des signaux d'alarme de rapaces (S1A, S1B) qui sont des signaux de détresse de synthèse de milan noir, des signaux de détresse interspécifiques (S2) qui sont des signaux de détresse synthétisés à partir de caractéristiques communes des signaux naturels de détresse des étourneaux, vanneaux, corvidés et laridés, et des signaux d'envol (S3) de différentes espèces qui représentent des battements d'ailes de colombidés.

8. Dispositif selon la revendication 7,
**caractérisé en ce qu'**il comporte des moyens de déclenchement à distance de l'émission d'une séquence acoustique.

9. Aéronef,
**caractérisé en ce qu'**il comporte un dispositif d'effarouchement acoustique (1) tel que celui spécifié sous l'une des revendications 7 et 8.

10. Aéronef selon la revendication 9,
**caractérisé en ce que** lesdits moyens d'émission (3) du dispositif d'effarouchement acoustique (1) sont agencés au niveau du train d'atterrissage avant (7) dudit aéronef (AC) de manière :
- à se trouver à l'intérieur du fuselage (8) de l'aéronef (AC) lorsque ledit train d'atterrissage (7) est entré ; et
- à être déplacés lors de la sortie du train d'atterrissage (7) pour se retrouver à l'extérieur en étant dirigés vers une zone à sécuriser, lorsque le train d'atterrissage (7) est entièrement sorti.

11. Aéronef selon l'une des revendications 9 et 10,
**caractérisé en ce que** ledit dispositif d'effarouchement acoustique (1) fait partie d'un système d'alerte de personnel au sol, embarqué sur ledit aéronef (AC).

## Patentansprüche

1. Verfahren zum akustischen Abschrecken von Vogelarten, wobei:
a) mindestens eine akustische Sequenz erzeugt wird; und
b) diese akustische Sequenz in Form akustischer Wellen gesendet wird,
wobei außerdem bei Schritt a) in ein und derselben akustischen Sequenz die Wiederholung einer Kombination von mindestens drei unterschiedlichen Synthesesignalkategorien erzeugt wird, die nacheinander Alarmsignale von Raubvögeln (S1A, S1B) umfassen, die synthetische Notsignale eines Schwarzmilan, interspezifische Notsignale (S2), die Notsignale sind, die ausgehend von gemeinsamen Charakteristiken der natürlichen Notsignale der Stare, Kiebitze, Corvidae und Laridae synthetisiert werden, und Abflugsignale (S3) unterschiedlicher Arten sind, die Flügelschläge der Colombidae darstellen.

2. Verfahren nach Anspruch 1,
**dadurch gekennzeichnet, dass** es in der Sequenz außerdem Hilfssignale einführt, die eine Effizienz gegenüber einer gegebenen Vogelart aufweisen.

3. Verfahren nach einem der Ansprüche 1 und 2,
**dadurch gekennzeichnet, dass** die Signale durch akustische Synthese auf natürlichen Signalmodellen aufgebaut sind.

4. Verfahren nach einem der vorhergehenden Ansprüche, **dadurch gekennzeichnet, dass** mindestens eine der folgenden Änderungen an der akustischen Sequenz ausgeführt wird:
- eine Änderung der Dauer der Signale;
- eine Änderung der Dauer von Schweigen zwischen aufeinanderfolgenden Signalen; und
- eine Änderung ihrer relativen Positionen in der Sequenz.

5. Verfahren nach einem der vorhergehenden Ansprüche, **dadurch gekennzeichnet, dass** die Sequenz eine vorbestimmte Dauer aufweist, in deren Verlauf jede Signalkategorie während einer gleichen Zeit ausgestrahlt wird, wobei die Signalkategorien nacheinander in einer Schleife ausgestrahlt werden.

6. Verfahren nach einem der vorhergehenden Ansprüche, **dadurch gekennzeichnet, dass** die akustische Sequenz in Form von Schallwellen mit Hilfe von Sendemitteln (3) gesendet wird, die im Bereich des vorderen Fahrwerks (7) eines Luftfahrzeugs (AC) derart eingerichtet sind, dass:
- sie sich im Inneren des Rumpfs (8) des Luftfahrzeugs (AC) befinden, wenn das Fahrwerk (7) eingefahren ist; und
- beim Ausfahren des Fahrwerks (7) verlagert werden, um außerhalb zu liegen, wobei sie zu einer abzusichernden Zone gelenkt werden, wenn das Fahrwerk (7) vollständig ausgefahren ist.

7. Vorrichtung zum akustischen Abschrecken von Vogelarten, die Mittel (3) zum Senden einer akustischen Sequenz in Form von Schallwellen umfasst, wobei die Sendemittel (3) eine akustische Sequenz senden, die die Wiederholung einer Kombination von mindestens drei unterschiedlichen Signalkategorien umfasst, die nacheinander Alarmsignale von Raubvögeln (S1A, S1B), die synthetische Notsignale eines Schwarzmilan, interspezifische Notsignale (S2), die Notsignale sind, die ausgehend von gemeinsamen Charakteristiken der natürlichen Notsignale der Stare, Kiebitze, Corvidae und Laridae synthetisiert werden, und Abflugsignale (S3) unterschiedlicher Arten sind, die Flügelschläge der Colombidae darstellen.

8. Vorrichtung nach Anspruch 7,
**dadurch gekennzeichnet, dass** sie Mittel zum Auslösen auf Entfernung des Sendens einer akustischen Sequenz umfasst.

9. Luftfahrzeug,
**dadurch gekennzeichnet, dass** es eine Vorrichtung zum akustischen Abschrecken (1) nach einem der Ansprüche 7 und 8 umfasst.

10. Luftfahrzeug nach Anspruch 9,
**dadurch gekennzeichnet, dass** die Sendemittel (3) der Vorrichtung zum akustischen Abschrecken (1) im Bereich des vorderen Fahrwerks (7) des Luftfahrzeugs (AC) derart angeordnet sind, dass:
- sie sich im Inneren des Rumpfs (8) des Luftfahrzeugs (AC) befinden, wenn das Fahrwerk (7) eingefahren ist; und
- beim Ausfahren des Fahrwerks (7) verlagert werden, um außerhalb zu liegen, wobei sie zu einer abzusichernden Zone gelenkt werden, wenn das Fahrwerk (7) vollständig ausgefahren ist.

11. Luftfahrzeug nach einem der Ansprüche 9 und 10,
**dadurch gekennzeichnet, dass** die Vorrichtung zum akustischen Abschrecken (1) Teil eines Bodenpersonal-Warnsystems ist, das auf dem Luftfahrzeug (AC) mitgeführt wird.

## Claims

1. Method for acoustically scaring avian species, in which method:
a) at least one acoustic sequence is generated; and
b) this acoustic sequence is emitted in the form of acoustic waves,
in which method, in addition to step a), in a single acoustic sequence, the repetition of a combination of at least three different categories of synthesised signal is generated, comprising, in succession, warning signals from birds of prey (S1A, S1 B), which are synthesised distress signals from a black kite, interspecific distress signals (S2), which are distress signals having been synthesised from the features that are common to the natural distress signals of starlings, lapwings, Corvidae and Laridae, and taking-flight signals (S3) from various species, which represent beatings of Colombidae wings.

2. Method according to claim 1,
**characterised in that** auxiliary signals which are effective on a given avian species can additionally be introduced into said sequence.

3. Method according to either claim 1 or claim 2,
**characterised in that** said signals are formed by acoustic synthesis based on models of natural signals.

4. Method according any of the preceding claims,
**characterised in that** at least one of the following modifications is made to said acoustic sequence:
- a modification to the duration of the signals;
- a modification to the duration of the silent periods between successive signals; and
- a modification to their relative positions within the sequence.

5. Method according any of the preceding claims,
**characterised in that** said sequence has a predetermined duration, over the course of which each signal category is broadcast for the same length of time, said signal categories being broadcast in succession in a loop.

6. Method according to any of the preceding claims,
**characterised in that** the acoustic sequence is emitted in the form of acoustic waves by means of emission means (3) which are arranged at the nose landing gear (7) of an aircraft (AC) so as to be:
- located inside the fuselage (8) of the aircraft (AC) when said landing gear (7) is retracted; and
- moved when the landing gear (7) extends so as to be outside while being directed towards a zone to be safeguarded, when the landing gear (7) is fully extended.

7. Device for acoustically scaring avian species, comprising means (3) for emitting an acoustic sequence in the form of acoustic waves, said emission means (3) emitting an acoustic sequence comprising the repetition of a combination of at least three different signal categories, comprising, in succession, warning signals from birds of prey (S1A, S1B), which are synthesised distress signals from a black kite, interspecific distress signals (S2), which are distress signals having been synthesised from the features that are common to the natural distress signals of starlings, lapwings, Corvidae and Laridae, and taking-flight signals (S3) from various species, which represent beatings of Colombidae wings.

8. Device according to claim 7,
**characterised in that** it has means for remotely triggering the emission of an acoustic sequence.

9. Aircraft,
**characterised in that** it has an acoustic scaring device (1) of the type specified in either claim 7 or claim 8.

10. Aircraft according to claim 9,
**characterised in that** said emission means (3) of the acoustic scaring device (1) are arranged at the nose landing gear (7) of said aircraft (AC) so as to be:
- located inside the fuselage (8) of the aircraft (AC) when said landing gear (7) is retracted; and
- moved when the landing gear (7) extends so as to be outside while being directed towards a zone to be safeguarded, when the landing gear (7) is fully extended.

11. Aircraft according to either claim 9 or claim 10,
**characterised in that** said acoustic scaring device (1) forms part of a ground crew call system fitted to said aircraft (AC).
